# EUROPEAN PATENT SPECIFICATION

(11) **EP 1 467 561 B1**
(45) Date of publication and mention of the grant of the patent: **12.09.2007**
(21) Application number: 04008624.1
(22) Date of filing: 08.04.2004
(51) Int. Cl.: H04N 5/76

(54) **Video recording apparatus and control method thereof**
Videoaufnahmegerät und Steuerverfahren dazu
Appareil d'enregistrement vidéo et procédé de commande à cet effet.

(30) Priority: 09.04.2003 JP 2003104960
(43) Date of publication of application: 13.10.2004
(73) Proprietor: Pioneer Corporation, Tokyo-to (JP)
(72) Inventor: Nakamura, Takeshi, Tsurugashima-shi Saitama-ken (JP); Morita, Kouzou, Tsurugashima-shi Saitama-ken (JP); Miyasato, Hajime, Tsurugashima-shi Saitama-ken (JP)
(74) Representative: Grünecker, Kinkeldey, Stockmair & Schwanhäusser Anwaltssozietät

(56) References cited:
- EP-A- 1 180 768
- EP-A- 1 265 441
- "Tivo Viewer's Guide" 2002, TIVO , USA , XP002366656 * page 44 *

## Description

The present invention relates to a video recording apparatus which records a broadcasting video signal of a broadcasting program.

### Description of the Related Art

Japanese Unexamined Patent Application Publication No. 9-35411 (Patent Document 1) discloses a conventional video recording apparatus in which, without recording instructions for each program from the user, the video and audio signals of broadcasting programs are compressed and continuously recorded in the recording device as compression data over a predetermined time with respect to a television channel which has previously been designated by the user. With the video recording apparatus, a user can continuously or selectively watch various broadcasting programs over a predetermined time by reading and expanding the compression data from the recording device at the time of reproduction.

Furthermore, Japanese Unexamined Patent Application Publication No. 11-234599 (Patent Document 2), according to which claims 1 and 14 have been put in the two-part form, discloses a conventional video recording apparatus having two types of storage units, in which a first storage unit, e.g., a hard disk unit, stores broadcasting video data in FIFO (First In First Out) format, and a second storage unit, e.g., an optical disk unit, stores designated video data after the designated video data was searched from the video data stored in the first storage unit.

As described above, with the conventional video recording apparatuses, continuous recording of the broadcasting program was possible.

However, the continuous recording time of the broadcasting program is limited by the storage capacity of the storage device such as the hard disk drive in the video recording apparatus, and thus, at the time of reproduction, it was only possible to watch the past recorded programs as much as the storage capacity permits. Watching the past recorded programs longer than that permitted by the storage capacity needs to archive the data in other types of recording media such as tapes or optical disks before the data is erased by overwriting thereon as in the video recording apparatus disclosed in Patent Document 2, thereby requiring burdensome work for a user.

Therefore, to solve the above-mentioned problem, it is an object of the present invention to provide a video recording apparatus and control method thereof which enable the automatic recording and preserving of the programs which are highly probable for the user to watch afterwards among the past broadcasting programs without the user's burdensome work.

The above object of the present invention can be achieved by a video recording apparatus of the present invention. The apparatus is provided with: a primary storage device which carries out ring buffer type recording; a secondary storage device which is removable type; a receiving device receives a plurality of broadcasting video signals simultaneously; a preference information detecting device which detects user's preference information; a broadcasting program detecting device which detects broadcasting programs while assigning priorities to the broadcasting programs according to the preference information; a secondary storage control device which detects, as archived recording programs, broadcasting programs having higher priorities among the priorities assigned by the broadcasting program detecting device, and acquires broadcasting video signals of the archived recording programs from the receiving device, and causes the broadcasting video signals to be recorded in the secondary storage device; and a primary storage control device which detects, as regular recording programs, several broadcasting programs which may be received as broadcasting video signals by the receiving device among the broadcasting programs according to the priorities assigned by the broadcasting program detecting device, and acquires broadcasting video signals of the regular recording programs from the receiving device, and causes the broadcasting video signals to be recorded in the primary storage device.

The above object of the present invention can be achieved by a method of the present invention for controlling a video recording apparatus comprising a primary storage device which carries out ring buffer type recording, a removable type secondary storage device, and receiving device which receives a plurality of broadcasting video signals simultaneously. The method is provided with: a preference information detecting process for detecting user's preference information; a broadcasting program detecting process for detecting broadcasting programs while assigning priorities to the broadcasting programs according to the preference information; a secondary storage control process for detecting, as archived recording programs, broadcasting programs having higher priorities among the priorities assigned by the broadcasting program detecting device, acquiring broadcasting video signals of the archived recording programs from the receiving device, and causing the broadcasting video signals to be recorded in the secondary storage device; and a primary storage control process for detecting, as regular recording programs, several broadcasting programs which may be received as broadcasting video signals by the receiving device among the broadcasting programs according to the priorities assigned by the broadcasting program detecting device, acquiring broadcasting video signals of the regular recording programs from the receiving device, and causing the broadcasting video signals to be recorded in the primary storage device.
FIG. 1 is a block diagram that shows the structure of a video recording apparatus to which the present invention is applied;
FIG. 2 is a flow chart that shows a main routine;
FIG. 3 is a flow chart that shows processing of a recording reservation scheduling;
FIG. 4 is a flow chart that shows processing of an archived recording program scheduling;
FIG. 5 is a flow chart that shows processing of a regular recording program scheduling;
FIG. 6 is a flow chart that shows processing of rescheduling; and
FIG. 7 is a flow chart that shows reproduction process of a recording program.

Hereinafter, the preferred embodiment of the present invention will be described in detail with reference to the drawings.

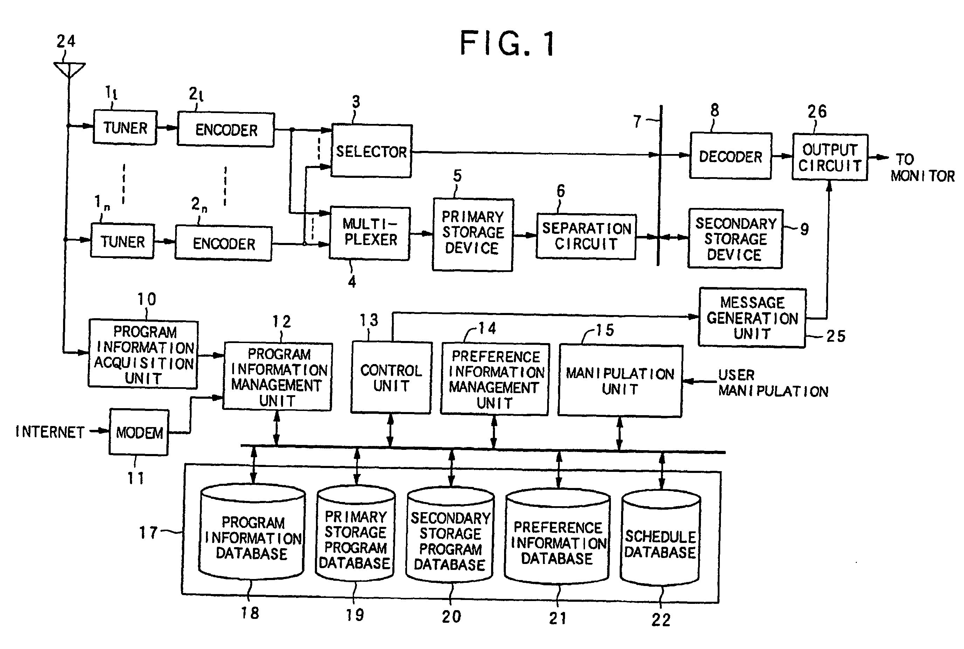

FIG. 1 shows a video recording apparatus of the present invention. The video recording apparatus is provided with: n tuners 1₁ to 1ₙ (where n is an integer greater than 0); n encoders 2₁ to 2ₙ; a selector 3; a multiplexer 4; a primary storage device 5; a separation circuit 6; a bus 7; a decoder 8; a secondary storage device 9; a program information acquisition unit 10; a modem 11; a program information management unit 12; a control unit 13; a preference information management unit 14; a manipulation unit 15; a bus 16; a database unit 17; and a message generation unit 25; and an output circuit 26.

Each of the tuners 1₁ to 1ₙ receives any television broadcasting signal through an antenna 24, and demodulates the received signal to output analog video and audio signals (that is, broadcasting video signal). Although it is assumed that the tuners 1₁ to 1ₙ has the same structure in this embodiment, they may also be equipped as tuners for terrestrial broadcasting, BS broadcasting, or CS broadcasting, for example, and more than one tuner may be provided for each broadcasting type. Furthermore, the number of the tuners is not necessarily plural. Each of the encoders 2₁ to 2ₙ transforms the video and audio signals outputted from the tuners 1₁ to 1ₙ into compression data, e.g., in MPEG format. The selector 3 selectively outputs compression data from any one of the encoders 2₁ to 2ₙ to the bus 7. Selection of the selector 3 is accomplished according to the instruction of the control unit 13. The multiplexer 4 multiplexes each of the output compression data of the encoders 2₁ to 2ₙ, and provides the multiplexed compression data to the primary storage device 5.

The primary storage device 5 is a hard disk drive, and records the multiplexed compression data supplied from the multiplexing circuit 4 into an internal fixed disk in a ring buffer type according to the recording instruction of the control unit 13. That is, each address within the fixed disk is recorded from a start address to an end address in a predetermined order of addresses, and when the recording of the end address is completed, a process returns to the start address, overwriting is performed and the process is repeated.

Further, the primary storage device 5 reads the multiplexed compression data which contains desired compression data according to a read instruction of the control unit 13.

The separation circuit 6 carries out separation extraction of the desired compression data from the multiplexed data read from the primary storage device 5, and outputs it to the bus 7.

The bus 7 is connected to each output of the selector 3 and the separation circuit 6, each input of the decoder 8, and each input and output of the secondary storage unit 9.

The decoder 8 expands the compression data outputted from the selector 3, the separation circuit 6, or the secondary storage device 9 to restore the video and audio signals. The restored video and audio signals are supplied to a monitor (not shown) through the output circuit 26.

The secondary storage device 9 is a removable disk drive, and records the compression data outputted from the selector 3 or the separation circuit 6 into the recording medium (not shown) according to the recording instruction of the control unit 13. The recording medium used for the secondary storage device 9 may be freely exchanged. The secondary storage device 9 is also capable of reading compression data from the recording medium according to a read instruction of the control unit 13. The compression data, which has been read, is supplied to the decoder 8 through the bus 7.

The program information acquisition unit 10 extracts program information, such as EPG, contained within the received signal, i.e., the program information overlapping the broadcast wave, and outputs the extracted program information to the program information management unit 12 as data. The modem 11 is connectable to the Internet, and it communicates with a predetermined server computer on the Internet (not shown), acquires program information, and outputs the program information to the program information management unit 12 as data. The predetermined server computer is a computer which dispatches the latest program information on the broadcasting programs of each television broadcasting station, for example. Such computers dispatching the program information are not limited to one set.

The program information management unit 12, the control unit 13, the preference information management unit 14, the manipulation unit 15, and the database unit 17 are connected to the bus 16.

The database unit 17 consists of one or more hard disk drives, for example. In the database unit 17, a program information database (DB) 18, a primary storage program database 19, a secondary storage program database 20, a preference information database 21, and a schedule database 22 are formed.

The program information management unit 12 manages program information acquired by the program information acquisition unit 10 and the modem 11 by forming the program information database 18 within the database unit 17. The control unit 13 controls operation of the whole apparatus. Specifically, the control unit 13 controls write and read operations of both the primary storage device 5 and the secondary storage device 9. The control unit 13 forms the primary storage program database 19 with respect to the broadcasting programs contained in the compression data recorded in the primary storage device 5 within the database unit 17, and forms the secondary storage program database 20 with respect to the broadcasting programs contained in the compression data recorded in the recording medium of the secondary storage device 9 within the database unit 17.

In the program information database 18, a program title, a broadcasting station, a broadcasting date, a broadcasting time, a genre, information regarding performers (role names/titles of songs), and comments are archived for every program. In the primary storage program database 19, a program title, a start address, an end address, data size, a broadcasting station, a broadcasting date, a broadcasting time, a genre, information regarding performers, and comments are archived for every program. In the secondary storage program database 20, a program title, a media ID, a start address, an end address, data size, a broadcasting station, a broadcast date, a broadcasting time, a genre, information regarding performers, and comments are archived for every program. Media IDs are IDs for distinguishing a plurality of recording media, e.g., label names of the recording mediums, or identification codes described in a special file recorded in the recording medium.

Moreover, the control unit 13 forms the schedule database 22 within the database unit 17 with respect to the broadcasting programs stored in the primary storage device 5 and the secondary storage device 9.

The preference information management unit 14 manages the user's watching history, recording history, and manipulation history, and extracts preference information from these histories. The extracted preference information is stored within the database unit 17 as a preference information database 21. Although an extraction method of the preference information is not limited, the well-known extraction methods, such as TF-IDF (Term Frequency-Inverse Document Frequency), have been used. An extraction method of preference information is disclosed in, for example, "The principle of word dignity attachment based on frequency-of-appearance information" (written in 1989 by Bin Umino in Tokyo University) on Pages 67 to 88 of Library and Information Science No. 26.

The manipulation unit 15 includes a keyboard, by which manipulation data, according to key manipulation of the user, is supplied to the control unit 13.

Furthermore, a message generation unit 25 is connected to the control unit 13. The message generation unit 25 generates message data by which notice to the user, selection, etc., is prompted according to instructions of the control unit 13, and supplies it to the output circuit 26. The message data is data which shows, for example, characters. The output circuit 26 relays the video and audio signals supplied from the decoder 8 to the monitor, and if message data is provided from the message generation unit 25, relays a video signal according to the message data preferentially or routes a video signal supplied from the decoder 8 to the monitor.

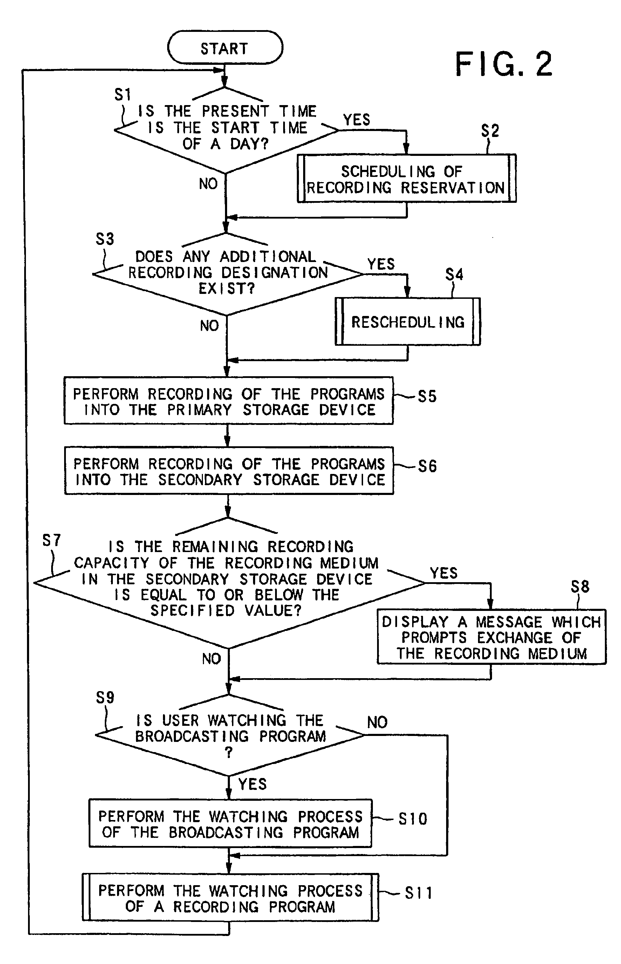

In the video recording apparatus having such a configuration, the control unit 13 repeatedly performs a main routine. When executing the main routine, as shown in Fig. 2, the control unit 13 first determines whether the present time is the start time of a day (Step S1). Start time of a day means the time that becomes a breakpoint of recording per day, and is set, for example, around 4:00 a.m., at which time broadcasting decreases the most. If it is the start time of a day, recording reservation scheduling will be performed (Step S2).

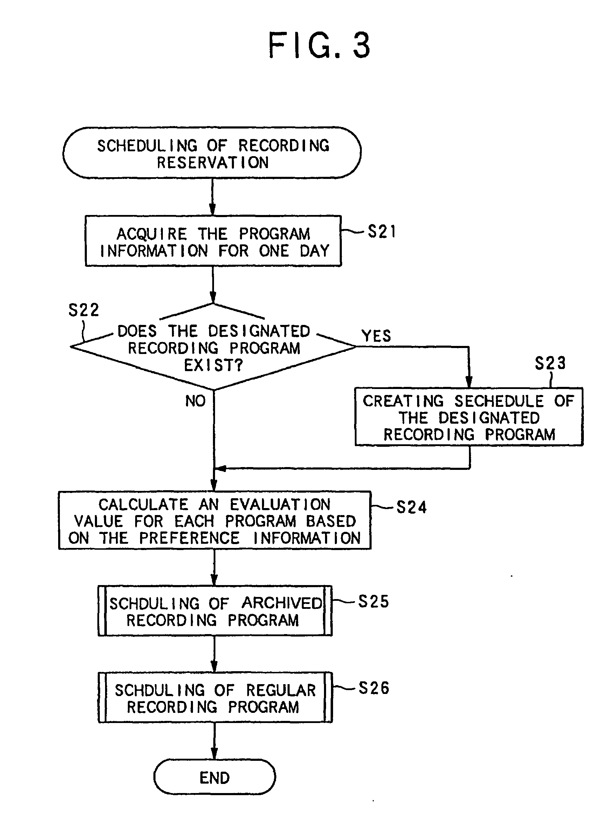

In recording reservation scheduling, as shown in Fig. 3, the control unit 13 acquires the program information for one day (Step 21). Since the program information has been stored by the program information management unit 12 in the program information database 18 within the database unit 17, the control unit 13 reads the program information for one day from the program information database 18. The program information for one day is the program information for 24 hours from that point of time.

After acquisition of the program information, the control unit 13 determines whether the recording program designated by the user is among those programs for one day (Step S22). It is possible for the user to designate a recording program beforehand by a key manipulation on the manipulation unit 15. Since the designated recording program is stored, for example, within the database unit 17, at Step S22, it is determined whether there is any broadcasting program, among the designated recording programs, within 24 hours from that point of time. If there is a broadcasting program designated to be recorded, a schedule with respect to the designated recording program is created and written into the schedule database 22 within the database unit 17 (Step S23). In the schedule data of the designated recording program to be created, selection of one tuner among the tuners 1₁ to 1ₙ for each recording program and the recording reservation to the secondary storage device 9 are shown.

If it is determined at Step S22 that no broadcasting program is designated to be recorded, or after the execution of Step S23, the control unit 13 calculates an evaluation value for each program based on the preference information (Step S24). According to the user's preference information stored in the preference information database 21 and the program information stored in the program information database 18, an evaluation value is calculated for each the programs for one day. In calculation of an evaluation value, for example, a technique utilizing the above-mentioned TF-IDF may be used.

The control unit 13 performs scheduling of the archived recording programs after executing Step S24 (Step S25), and further performs scheduling of regular recording programs (Step S26).

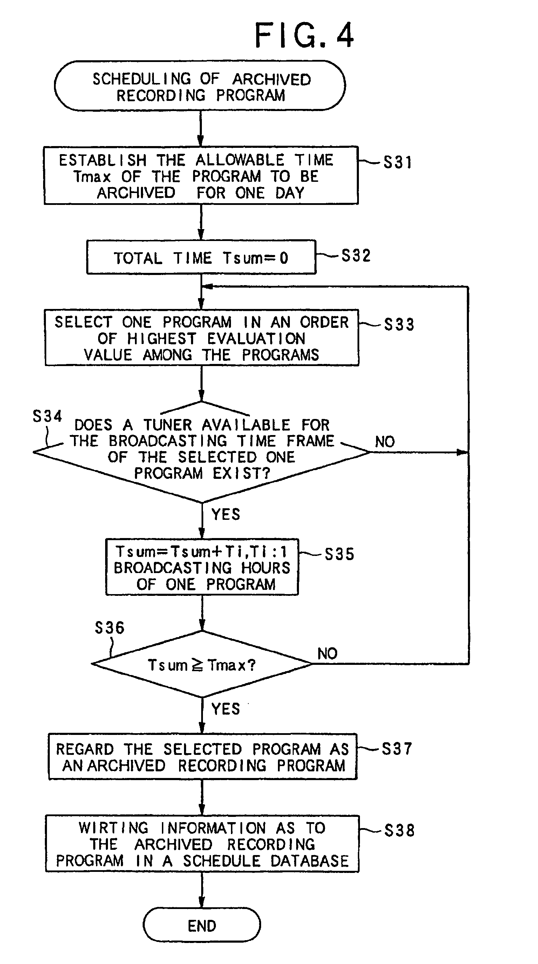

In the scheduling of the archived recording programs, as shown in Fig. 4, the control unit 13 establishes the allowable time Tₘₐₓ of the program to be archived by the secondary storage device 9 for one day (Step S31). The allowable time Tₘₐₓ may be read from the value established beforehand and the value thereof is, for example, 5 hours. Next, the total time Tₛᵤₘ is set to 0 (Step S32), and one program is selected in an order of highest evaluation value among the programs of which the evaluation values were calculated at Step S24 (Step S33). It is determined whether a tuner is available for the broadcasting time frame of the selected one program (Step S34). If it is in the reservation state that all of n tuners are used during the broadcasting time frame of the selected one program, since recording is impossible, it returns to Step S33 and the next one program is selected. The tuner used for the secondary storage device may also be used as an object for determination of its availability at Step S34. If there is a tuner, among n tuners, that has not been assigned to be used at the broadcasting time frame of the selected one program, a new total time Tₛᵤₘ will be computed by adding the broadcasting hours (time length) Ti of the selected program to the total time Tₛᵤₘ (Step S35). The broadcasting hours Ti of the program can be obtained from the program information. It is determined whether the computed total time Tₛᵤₘ is longer than the allowable time Tₘₐₓ (Step S36). If Tₛᵤₘ < Tₘₐₓ, the process will return to Step S33 and operation of steps S33 to S36 will be repeated.

The control unit 13 regards the program selected by executing steps S31 to S36 as an archived recording program (Step S37), and it in the schedule database 20 within the database unit 17 as the program to be recorded in a recording medium by the secondary storage device 9 (Step S38).

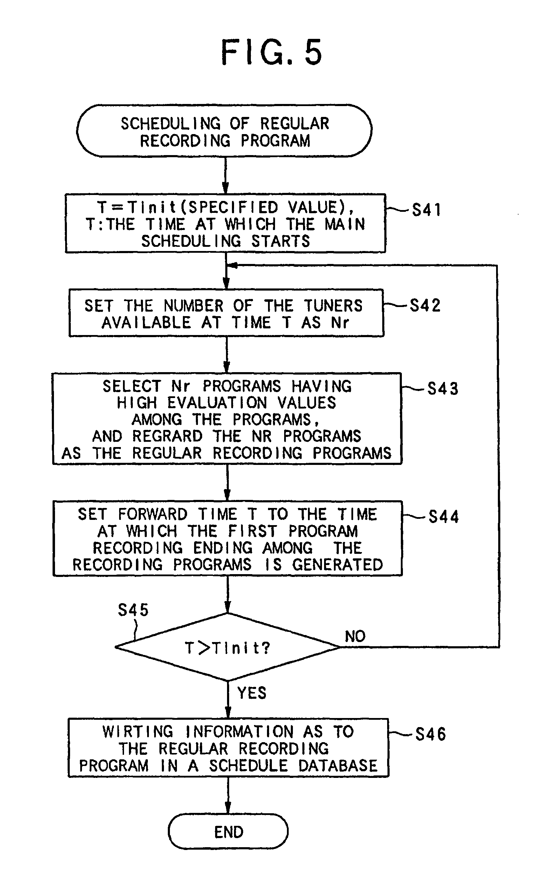

In the scheduling of regular recording programs, as shown in Fig. 5, the control unit 13 sets the time T, that is, the time at which the main scheduling starts, to the specified value Tᵢₙᵢₜ (Step S41). It is preferable that the specified value Tᵢₙᵢₜ be chosen to be the time at which time broadcasting decreases the most, for example, Tᵢₙᵢₜ = 4:00 a.m., or it may be established arbitrarily. After the establishment of time T, the number of the tuners available at time T is detected as Nr (Step S42). Nr is the number of vacant tuners other than the tuner already assigned by scheduling at time T for recording. Nr = total number of tuners n - number of designated recording programs - number of archived recording programs.

Furthermore, Nr programs having high evaluation values, among the programs whose evaluation values were calculated at Step S24, are selected, and the Nr programs are regarded as the regular recording programs (Step S43). The designated recording programs and archived recording programs which have already been established may also be removed from the Nr programs so that the regular recording programs do not overlap the designated recording programs or the archived recording programs. Time T is set forward to the time at which the first program ending among the n recording programs is generated (Step S44), and it is determined whether time T has reached the specified value Tᵢₙᵢₜ (Step S45). The process returns to Step S42 and the above steps S42 to S45 are repeated until time T is set forward and returns to the specified value Tᵢₙᵢₜ (that is, until the regular recording program for one day is established). If time T is set forward and returns to the specified value Tᵢₙᵢₜ, it is written in the schedule database 22 within the database unit 17 as a regular recording program recorded by the primary storage device 5 (Step S46).

In the schedule database 22, a recording program title, a scheduling type, a channel, a tuner number, a program start time, a program end time, and a recording destination are written for every recording program. The scheduling type is an identifier distinguishing a designated recording program as, an archived recording program, or a regular recording program, and a recording destination designates the primary storage device 5 or secondary storage device 9. The tuner number is a number which shows the assigned tuner among the tuners 1₁ to 1ₙ.

After performing the recording reservation scheduling of Step S2 described above, the control unit 13 moves to Step S3. If it was determined at Step S1 that the present time is not the start time for one day, Step S3 is immediately performed.

The control unit 13 determines whether there has been any additional recording designation at Step S3. If a recording designation is newly performed by the user with respect to a day by key manipulation after the start time for that day, it is regarded that there is a recording designation. Rescheduling will be performed if there is an additional recording designation (Step S4).

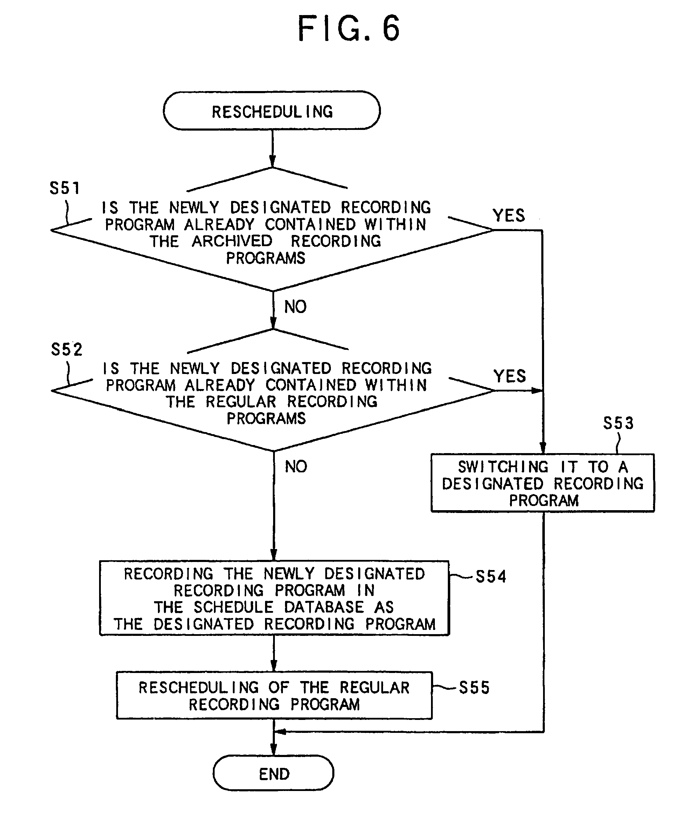

In rescheduling, as shown in Fig. 6, the control unit 13 determines whether the newly designated recording program is contained within the archived recording programs determined at Step S37, according to the recorded contents of the schedule database 22 (Step S51). If the newly designated recording program is contained among the archived recording programs, it switches to a designated recording program (Step S53). That is, the scheduling type of the corresponding recording program in the schedule database 22 within the database unit 17 is overwritten to a designated recording program. However, other data, such as the recording destination and the tuner number, are used as they are, without being overwritten. Since it is scheduled to be recorded, the new designation is disregarded. If the newly designated recording program is not contained among the archived recording programs, it is determined whether it is contained among the regular recording programs which were determined at Step S43 (Step S52). If the newly designated recording program is contained among the regular recording programs, it is switched to a designated recording program (Step S53). That is, the scheduling type of the corresponding recording program of the schedule database 22 within the database unit 17 is overwritten to a designated recording program, and the recording destination is overwritten to the secondary storage device 9. The data with respect to the tuner number assigned as a regular recording program is used as it is. If the newly designated recording program is not included in the regular recording programs either, in place of the program having the minimum evaluation value among the regular recording programs in the broadcasting hours frame of the newly designated recording program, the newly designated recording program is written in the schedule database 22 as the designated recording program recorded in a recording medium by the secondary storage device 9 (Step S54). Then, rescheduling of the regular recording program is performed (Step S55). In the rescheduling of Step S55, the program whose recording was scheduled but overlapped in time by the addition of a newly designated recording program may be eliminated from the schedule database 22, or the above-mentioned scheduling of regular recording programs at Steps S42 to S46 may be performed with the present time being set to T. However, the program already being recorded is excluded. The schedule database 22 within the database unit 17 is updated by rescheduling.

After the execution of rescheduling, the control unit 13 instructs recording to the primary storage device 5 according to the schedule data with respect to the regular recording programs recorded in the schedule database 22, and writes program information with respect to the programs recorded in the primary storage device 5 into the primary storage program database 19 within the database unit 17 (Step S5). Moreover, according to the schedule data with respect to the designated or archived recording programs written in the schedule database 22, the secondary storage device 9 is instructed to record, and the program information with respect to the programs recorded in the secondary storage device 9 is written into the secondary storage program database 20 within the database unit 17 (Step S6). At Steps S5 and S6, the selection of tuners 1₁ to 1ₙ, the establishment of the receiving channel of the selected tuner, the selection of the selector 3, the selection of multiplexing of the multiplexing circuit 4, and the selection of the storage device are performed according to the schedule data. According to the recording instructions at Step S5, multiplexed compression data is written into the primary storage device 5. Moreover, at Step S5, if the multiplexed compression data is overwritten to be recorded to the primary storage device 5, in addition to writing the program information with respect to the program recorded as a multiplexed compression data in the primary storage device 5 into the primary storage program database 19 within the database unit 17, the program information with respect to the program eliminated by overwrite recording is eliminated from the primary storage program database 19 within the database unit 17. The video and audio signals outputted from the one tuner selected according to the recording instruction at Step S6 are changed into compression data by the selected one encoder, and the compression data is supplied to the secondary storage device 5 through the selector 3 and the bus 7, and is written into a recording medium by the secondary storage device 5.

The control unit 13 determines whether the remaining recording capacity of the recording medium set in the secondary storage device 9 is equal to or below the specified value (for example, 5% of the total storage capacity) (Step S7). The remaining recording capacity of the recording medium may be detected by reading an index information area, such as a header portion of the recording medium. If the remaining recording capacity of the recording medium is equal to or below the specified value, a message which prompts exchange of the recording medium is displayed (Step S8). This message is generated in the message generation unit 25, and, although it may be dialog-displayed on the monitor, it may also be displayed on a display device (not shown) provided on the manipulation panel of this apparatus. This message display continues until the user sets a new recording medium or a recording medium having a remaining recording capacity equal to or greater than the specified value. The recording medium of the secondary storage device 9 may be made to be ejected compulsorily together with the message display. In addition, when an automatic exchange function of the recording medium is equipped by the secondary storage device 9 itself such as a disk changer or complementary equipments thereof, the control unit 13 will issue instructions as to the automatic exchange of the recording medium at Step S8. Since there may be cases in which exchange is not possible due to the absence of the user or the lack of a suitable recording medium, etc., even if a massage prompting the exchange of the recording medium is displayed, it is desirable to set the specified value, which is the threshold value at Step S7 performing a determination on the exchange of a recording medium, to be generous.

After the execution of Step S8, or if it was determined that the remaining recording capacity of the recording medium at Step S7 is greater than the specified value, the control unit 13 determines whether or not the broadcasting program is being watched by the user (Step 9). For example, when manipulation for watching by the monitor, such as channel manipulation, is performed by the user, it is determined that the broadcasting program is being watched, and the watching process of the broadcasting program is performed (Step S10). In Step S10, for example, at the time that watching starts, the recording of the program having the lowest priority among the regular recording programs stored in the scheduling database 22 is stopped, and the tuner currently assigned to the stopped program is released to be used for the user's watching of the broadcasting program. Moreover, when watching is ended, the tuner assigned for watching of the user's broadcasting program is released, and the rescheduling of the regular recording programs is performed as in Step S55 so that the tuner may be assigned for a regular recording program.

After the execution of Step S10, or if it is determined that the broadcasting program is not being watched at Step S9, the control unit 13 performs the reproduction process of a recording program (Step S11).

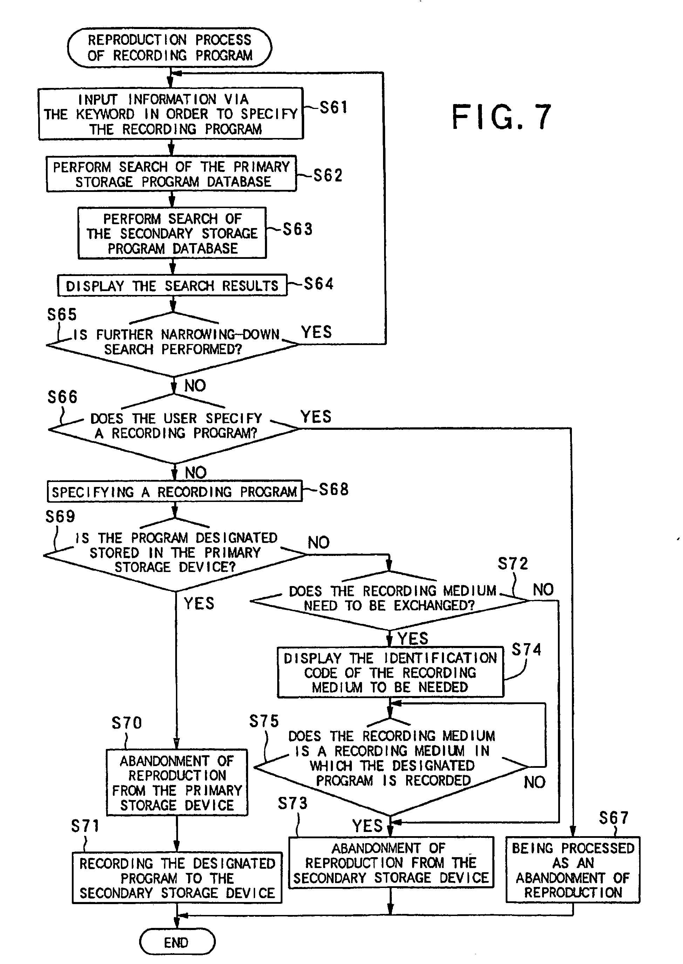

In reproduction process of a recording program, as shown in Fig. 7, first, the control unit 13 lets the user input information via the keyword in order to specify the recording program, and accepts it (Step S61). The program relevant to the accepted keyword is searched in the primary storage program database 19 (Step S62). Furthermore, the program relevant to the keyword is searched in the secondary storage program database 20 (Step S63). The search results of Steps S62 and S63 are displayed on the monitor (Step S64). The search results are generated as message data in the message generation unit 25, and then, they are displayed on the monitor as, for example, a program title through the output circuit 26. When a plurality of programs is searched, program titles are displayed as a list. It is determined whether further narrowing-down search will be performed using the search results (Step S65). This is determined according to the user manipulation from the manipulation unit 15. In case of the further narrowing-down search, the process moves to Step S61, and steps S61 through S65 are repeated. When further narrowing-down search is not performed, it is determined whether or not a recording program was specified by the user (Step S66). As in Step S65, this is determined according to user manipulation from the manipulation unit 15. If a recording program is not specified, this will be processed as an abandonment of reproduction (Step S67). At Step S67, the monitor may display that reproduction will not be performed, or alternatively, may carry out nothing. If a recording program has been specified, that program will be designated, and it will be accepted (Step S68). Designation of the program at Step S68 is performed by rendering one program to be chosen among at least one program displayed on the monitor as a result of search, according to the user manipulation.

The control unit 13 determines whether the program designated at Step S68 is the program (the regular recording program) stored in the primary storage device 5 (Step S69). If it is the program stored in the primary storage device 5, the primary storage device 5 will be instructed to reproduce the designated program (Step S70). Moreover, this designated program, which was actually watched by the user, should be considered to be an archived recording program rather than a regular recording program. Accordingly, recording the designated program to the secondary storage device 9 is simultaneously instructed (Step S71). The reproduction instruction shows the start and end addresses of the primary storage device 5, and the primary storage device 5 reads multiplexed compression data containing the designated program specified by the start address and the end address, and supplies it to the separation circuit 6. The separation circuit 6 carries out separation extraction of the compression data from the multiplexed compression data, corresponding to the designated program. The extracted compression data is supplied to the decoder 8 and the secondary storage device 9 through the bus 7. The decoder 8 changes the supplied compression data into analog video and audio signals, and supplies them to the monitor. The secondary storage device 9 writes the supplied compression data in the recording medium. With respect to the program recorded in the secondary storage device 9, the program information is written in the secondary storage program database 20 within the database unit 17 by the control unit 13.

When it is determined that the program is not stored in the primary storage device 5, the control unit 13 regards the program as the one recorded in the secondary storage device 9, and determines whether the recording medium needs to be exchanged (Step S72). If it is the program currently recorded in the recording medium set in the secondary storage device 9, the secondary storage device 9 is instructed to reproduce the designated program (Step S73). The start address and the end address of the recording medium that were obtained by reading the secondary storage program database 20 are contained within the reproduction instruction. The secondary storage device 9 sequentially reads the compression data (the compression data between the start address and the end address) of the designated program from the recording medium according to the reproduction instruction, and supplies it to the decoder 8 through the bus 7. The decoder 8 changes the supplied compression data into analog video and audio signals, and supplies them to the monitor.

If it has been determined that the recording medium needed to be exchanged at Step S72, the control unit 13 reads, from the secondary storage program database 20, the identification code (the media ID) of the recording medium in which the designated program is recorded, and displays it on the monitor (Step S74). The identification code that was read is supplied to the monitor from the output circuit 26 as a video signal through the message generation unit 25. Thereafter, it is determined whether the recording medium in which the designated program is recorded has been set to the secondary storage device 9 (Step S75). That is, at Step S74, the exchange to the recording medium in which the designated program is recorded is prompted to the user, and at Step S75, it is determined whether the exchange was properly performed. The identification code of the recording medium can be detected by reading the index information area, such as the header portion of the recording medium. If the recording medium in which the designated program is recorded is set to the secondary storage device 9, the secondary storage device 9 is instructed to reproduce the designated program (Step S73).

In the video recording apparatus according to the present invention, the broadcasting program having the highest evaluation value based on the user's preference information, that is, the compression data of the archived recording program is stored in the secondary storage device 9, which is a removable type. On the other hand, in the primary storage device 5 which accomplishes recording in a ring buffer type, a compressed data of several broadcasting programs of vacant tuners among the tuners 1₁ to 1ₙ and of a higher order of the evaluation value based on the preference information of the user is multiplexed and is stored as multiplexing compression data. Therefore, the user can watch, in three stages, the program which was broadcast in the past but meets the user's preference. That is, the broadcasting program, which is recently broadcast, can be watched among the regular recording programs which are stored in the primary storage device 5. Particularly, the past broadcasting program that meets the user's preference but is not sufficiently old can be watched out of the archived recording programs which are stored in the recording medium set to the secondary storage device 9, or the designated recording programs. Furthermore, the program that met the user's preference in the past can be watched out of the archived recording programs stored in the recording medium by the exchange of the recording medium, or the designated recording programs.

Moreover, in scheduling the recording reservation to the primary storage device 5 and secondary storage device 9, automatic selection of the recording program which meets the user's preference is accomplished according to the program information which has been acquired from outside and stored as the program information database, and the preference evaluation value stored as the preference information database which was computed from watching history of the user, recording history of the user, and manipulation history of the user. Accordingly, there is an effect that, with respect to the recording reservation of the broadcasting program, the user is not feel any burdensomeness.

Furthermore, since the primary storage program database 19 which manages the programs recorded in the primary storage device 5 and the secondary storage program database 20 which manages the record medium that is written by the second storage device 9 and the recorded program thereof are provided, the user can easily search and reproduce the recorded past broadcasting programs by using such database.

Moreover, there is another effect of the present invention that, if the remaining recording capacity of the recording medium set in the secondary storage device 9 decreases, a message which notifies that decrease will be displayed, and therefore the user need not care about the remaining recording capacity of the recording medium all the time.

Furthermore, although in the preferred embodiment explained above, the broadcast wave carrying the broadcasting programs are received by tuners, the recorded broadcasting programs are not limited thereto. For example, broadcasting signals (digital signal or analog signal) that are broadcast from CATV (cable television) through cables may also be received to be recorded. Moreover, data signals that are being broadcast in data stream formats through lines such as the Internet may also be received to be recorded.

Moreover, in the above-mentioned preferred embodiment, although the schedule data over a predetermined period, such as one day, is generated, whenever the recording of one broadcasting program is complete, it may be controlled to detect a designated recording program or an archived recording program and record it into the secondary storage device using the vacant tuners, and to detect an archived recording program and record it into the primary storage device using the vacant tuners.

Furthermore, in the above-mentioned preferred embodiment, although the number of the secondary storage device is one, this invention is also applicable to a video recording apparatus including a plurality of secondary storage devices, or to a video recording apparatus including a secondary storage device simultaneously recording/reproducing with respect to a plurality of recording media.

As mentioned above, according to this invention, it is possible to automatically record and archive the programs which are highly probable for the user to watch afterwards among the past broadcasting programs without the user's burdensome work.

## Claims

1. A video recording apparatus, comprising :
a primary storage device (5) which carries out ring buffer type recording;
a secondary storage device (9) which is removable type;
a receiving device (1₁-1ₙ) which receives a plurality of broadcasting video signals simultaneously;
a preference information detecting device (14) which detects user's preference information;
a broadcasting program detecting device (13) which detects broadcasting programs while assigning priorities to the broadcasting programs according to the preference information;
a secondary storage control device (13) which detects, as archived recording programs, broadcasting programs having higher priorities among the priorities assigned by the broadcasting program detecting device, and acquires broadcasting video signals of the archived recording programs from the receiving device, and causes the broadcasting video signals to be recorded in the secondary storage device; **characterised by**:
a primary storage control device (13) which detects, as regular recording programs, several broadcasting programs which may be received as broadcasting video signals by the receiving device among the broadcasting programs according to the priorities assigned by the broadcasting program detecting device, and acquires broadcasting video signals of the regular recording programs from the receiving device, and causes the broadcasting video signals to be recorded in the primary storage device.

2. The video recording apparatus according to Claim 1, wherein the broadcasting program detecting device (13) includes an input device which accepts the broadcasting program which is designated by the user as a designated recording program, and
when the designated recording program has been accepted, the secondary storage control device detects the designated recording program as the archived recording program at the time of broadcasting the designated recording program.

3. The video recording apparatus according to Claim 1, wherein the primary storage control device (13) detects the regular recording program for several amount of the broadcasting video signals which are capable of being received by the receiving device at the time when any one of the regular recording program ends.

4. The video recording apparatus according to Claim 1, wherein the secondary storage control device (13) includes a secondary storage schedule creating device which creates secondary storage schedule data of recording reservations with respect to the whole archived recording programs over a predetermined period at a predetermined time, and an acquiring device which acquires the broadcasting video signals of the archived recording programs from the receiving device according to the secondary storage schedule data and causes them to be recorded in the secondary storage device; and
wherein the primary storage control device (13) includes a primary storage schedule creating device which creates primary storage schedule data of recording reservations with respect to the whole regular recording programs over the predetermined period at the predetermine time, and an acquiring device which acquires the broadcasting video signals of the regular recording programs from the receiving device according to the primary storage schedule data and causing them to be recorded in the primary storage device.

5. The video recording apparatus according to Claim 4, wherein the primary and secondary storage schedule data are stored as a schedule database.

6. The video recording apparatus according to Claim 2 or 4, wherein when the designated recording program is newly accepted by the input device, the primary and secondary storage schedule creating device updates the primary and secondary schedule data.

7. The video recording apparatus according to Claim 1, wherein the secondary storage control device (13) includes a determining device which determines whether a remaining recording capacity of the recording medium in the secondary storage device is equal to or below a specified value, and notifying device which notifies an exchange of the recording medium when it is determined that the remaining recording capacity is equal to or below the specified value by the determining device.

8. The video recording apparatus according to Claim 1, wherein the secondary storage control device (13) stores the program information with respect to the archived recording program of which the broadcasting video signals are recorded by the secondary storage device as a secondary storage database; and
wherein the primary storage control device (13) stores the program information with respect to the regular recording program of which the broadcasting video signals are recorded by the primary storage device as a primary storage database.

9. The video recording apparatus according to Claim 8, wherein the program information stored in the secondary storage database contains an identification code of the recording medium which was used for the recording at the secondary storage device.

10. The video recording apparatus according to Claim 1, wherein the primary storage device (13) records the broadcasting video signal of the regular recording program by multiplexing it.

11. The video recording apparatus according to Claim 1, further comprising:
an instructing device which instructs the primary storage device to read the broadcasting video signals of any one of recording program of the regular recording programs which were recorded in the primary storage device as the broadcasting video signals; and
a providing device which provides the broadcasting video signals of the recording program, which has been read from the primary storage device, to a monitor for reproduction for display;
wherein the secondary storage control device causes the broadcasting video signals of the recording program, which has been read from the primary storage device, to be recorded in the secondary storage device.

12. The video recording apparatus according to Claim 1, wherein the broadcasting program detecting device (13) includes an acquisition device which acquires the program information of each of the broadcasting programs; and an evaluation device which calculates the evaluation values for each of the broadcasting programs according to the program information and preference information of the each broadcasting program, and assigns the priorities according to the order that the evaluation values are high to the each broadcasting program.

13. The video recording apparatus according to Claim 1, wherein the primary storage control device excludes the archived recording programs from the regular recording programs.

14. A method for controlling a video recording apparatus comprising a primary storage device which carries out ring buffer type recording, a removable type secondary storage device, and receiving device which receives a plurality of broadcasting video signals simultaneously, the method comprising:
a preference information detecting process for detecting user's preference information;
a broadcasting program detecting process for detecting broadcasting programs while assigning priorities to the broadcasting programs according to the preference information;
a secondary storage control process for detecting, as archived recording programs, broadcasting programs having higher priorities among the priorities assigned by the broadcasting program detecting device, acquiring broadcasting video signals of the archived recording programs from the receiving device, and causing the broadcasting video signals to be recorded in the secondary storage device; **characterised by**
a primary storage control process for detecting, as regular recording programs, several broadcasting programs which may be received as broadcasting video signals by the receiving device among the broadcasting programs according to the priorities assigned by the broadcasting program detecting device, acquiring broadcasting video signals of the regular recording programs from the receiving device, and causing the broadcasting video signals to be recorded in the primary storage device.

## Patentansprüche

1. Video-Aufzeichnungsvorrichtung, die umfasst:
eine primäre Speichereinrichtung (5), die Ring-Puffer-Aufzeichnung ausführt;
eine sekundäre Speichereinrichtung (9) vom entfernbaren Typ;
eine Empfangseinrichtung (1₁-1ₙ), die gleichzeitig eine Vielzahl von Rundfunk-Videosignalen empfängt;
eine Präferenzinformations-Erfassungseinrichtung (14), die Präferenzinformationen eines Benutzers erfasst;
eine Rundfunkprogramm-Erfassungseinrichtung (13), die Rundfunkprogramme erfasst und gleichzeitig den Rundfunkprogrammen entsprechend den Präferenzinformationen Prioritäten zuweist;
eine Einrichtung (13) zum Steuern des sekundären Speichers, die als archivierte Aufzeichnungsprogramme Rundfunkprogramme erfasst, die unter den Prioritäten, die durch die Rundfunkprogramm-Erfassungseinrichtung zugewiesen werden, höhere Prioritäten haben, und Rundfunk-Videosignale der archivierten Aufzeichnungsprogramme von der Empfangseinrichtung bezieht und bewirkt, dass die Rundfunk-Videosignale in der sekundären Speichereinrichtung aufgezeichnet werden, **gekennzeichnet durch**:
eine Einrichtung (13) zum Steuern des primären Speichers, die als reguläre Aufzeichnungsprogramme entsprechend den **durch** die Rundfunkprogramm-Erfassungseinrichtung zugewiesenen Prioritäten mehrere Rundfunkprogramme, die als Rundfunk-Videosignale **durch** die Empfangseinrichtung empfangen werden können, unter den Rundfunkprogrammen erfasst und Rundfunk-Videosignale der regulären Aufzeichnungsprogramme von der Empfangseinrichtung bezieht und bewirkt, dass die Rundfunk-Videosignale in der primären Speichereinrichtung aufgezeichnet werden.

2. Video-Aufzeichnungsvorrichtung nach Anspruch 1, wobei die Rundfunkprogramm-Erfassungseinrichtung (13) eine Eingabeeinrichtung enthält, die das Rundfunkprogramm annimmt, das durch den Benutzer als ein angegebenes Aufzeichnungsprogramm angegeben wird, und
wenn das angegebene Aufzeichnungsprogramm angenommen worden ist, die sekundäre Speichereinrichtung das angegebene Aufzeichnungsprogramm zur Zeit des Sendens des eingegebenen Aufzeichnungsprogramms als das archivierte Aufzeichnungsprogramm erfasst.

3. Video-Aufzeichnungsvorrichtung nach Anspruch 1, wobei die Einrichtung (13) zum Steuern des primären Speichers das reguläre Aufzeichnungsprogramm für mehrere der Rundfunk-Videosignale umfasst, die durch die Empfangseinrichtung empfangen werden können, wenn ein beliebiges der regulären Aufzeichnungsprogramme endet.

4. Video-Aufzeichnungsvorrichtung nach Anspruch 1, wobei die Einrichtung (13) zum Steuern des sekundären Speichers eine Einrichtung zum Erzeugen eines Plans für den sekundären Speicher, die Plandaten für den sekundären Speicher von Aufzeichnungsreservierungen bezüglich aller archivierten Aufzeichnungsprogramme über einen vorgegebenen Zeitraum zu einer vorgegebenen Zeit erzeugt, sowie eine Bezugseinrichtung enthält, die die Rundfunk-Videosignale der archivierten Aufzeichnungsprogramme von der Aufzeichnungseinrichtung entsprechend den Plandaten für den sekundären Speicher bezieht und bewirkt, dass sie in der sekundären Speichereinrichtung aufgezeichnet werden; und
wobei die Einrichtung (13) zum Steuern des primären Speichers eine Einrichtung zum Erzeugen eines Plans für den primären Speicher, die Plandaten für den primären Speicher von Aufzeichnungsreservierungen bezüglich aller regulären Aufzeichnungsprogramme über den vorgegebenen Zeitraum zu der vorgegebenen Zeit erzeugt, sowie eine Bezugseinrichtung enthält, die die Rundfunk-Videosignale der regulären Aufzeichnungsprogramme von der Aufzeichnungseinrichtung entsprechend den Plandaten für den primären Speicher bezieht und bewirkt, dass sie in der primären Speichereinrichtung aufgezeichnet werden.

5. Video-Aufzeichnungsvorrichtung nach Anspruch 4, wobei die Plandaten für den primären und den sekundären Speicher als eine Plan-Datenbank gespeichert werden.

6. Video-Aufzeichnungsvorrichtung nach Anspruch 2 oder 4, wobei, wenn das angegebene Aufzeichnungsprogramm durch die Eingabeeinrichtung neu angenommen wird, die Einrichtung zum Erzeugen eines Plans für den primären und den sekundären Speicher die primären und sekundären Plandaten aktualisiert.

7. Video-Aufzeichnungsvorrichtung nach Anspruch 1, wobei die sekundäre Speicher-Steuereinrichtung (13) eine Feststelleinrichtung, die feststellt, ob eine verbleibende Aufzeichnungskapazität des Aufzeichnungsmediums in der sekundären Speichereinrichtung einem spezifizierten Wert gleich ist oder geringer als dieser, sowie eine Mitteilungseinrichtung enthält, die einen Austausch des Speichermediums mitteilt, wenn durch die Feststelleinrichtung festgestellt wird, dass die verbleibende Aufzeichnungskapazität dem spezifizierten Wert gleich ist oder geringer als dieser.

8. Video-Aufzeichnungsvorrichtung nach Anspruch 1, wobei die Einrichtung (13) zum Steuern des sekundären Speichers die Programminformationen bezüglich des archivierten Aufzeichnungsprogramms, dessen Rundfunk-Videosignale durch die sekundäre Speichereinrichtung aufgezeichnet werden, als eine Datenbank des sekundären Speichers speichert; und
wobei die Einrichtung (13) zum Steuern des sekundären Speichers die Programminformationen bezüglich des regulären Aufzeichnungsprogramms, dessen Rundfunk-Videosignale durch die primäre Speichereinrichtung aufgezeichnet werden, als Datenbank des primären Speichers speichert.

9. Video-Aufzeichnungsvorrichtung nach Anspruch 8, wobei die in der Datenbank des sekundären Speichers gespeicherten Programminformationen einen Identifizierungscode des Aufzeichnungsmediums enthalten, das zum Aufzeichnen in der sekundären Speichereinrichtung verwendet wurde.

10. Video-Aufzeichnungsvorrichtung nach Anspruch 1, wobei die primäre Speichereinrichtung (13) das Rundfunk-Videosignal des regulären Aufzeichnungsprogramms durch Multiplexieren desselben aufzeichnet.

11. Video-Aufzeichnungsvorrichtung nach Anspruch 1, die des Weiteren umfasst:
eine Anweisungseinrichtung, die die primäre Speichereinrichtung anweist, die Rundfunk-Videosignale eines beliebigen Aufzeichnungsprogramms der regulären Aufzeichnungsprogramme zu lesen, die in der primären Speichereinrichtung als die Rundfunk-Videosignale aufgezeichnet wurden; und
eine Bereitstellungseinrichtung, die die Rundfunk-Videosignale des Aufzeichnungsprogramms, die von der primären Speichereinrichtung gelesen worden sind, einem Monitor zur Wiedergabe zum Anzeigen bereitstellt;
wobei die Einrichtung zum Steuern des sekundären Speichers bewirkt, dass die Rundfunk-Videosignale des Aufzeichnungsprogramms, das aus der primären Speichereinrichtung gelesen worden ist, in der sekundären Speichereinrichtung aufgezeichnet werden.

12. Video-Aufzeichnungsvorrichtung nach Anspruch 1, wobei die Rundfunkprogramm-Erfassungseinrichtung (13) eine Bezugseinrichtung, die die Programminformationen jedes der Aufzeichnungsprogramme bezieht, sowie eine Bewertungseinrichtung enthält, die die Bewertungswerte für jedes der Rundfunkprogramme entsprechend den Programminformationen und den Präferenzinformationen jedes Rundfunkprogramms berechnet und die Prioritäten der Reihe nach jedem Rundfunkprogramm so zuweist, dass die Bewertungswerte hoch sind.

13. Video-Aufzeichnungsvorrichtung nach Anspruch 1, wobei die primäre Speicher-Steuereinrichtung die archivierten Aufzeichnungsprogramme aus den regulären Aufzeichnungsprogrammen ausschließt.

14. Verfahren zum Steuern einer Video-Aufzeichnungsvorrichtung, die eine primäre Speichereinrichtung, die Ring-Puffer-Aufzeichnung ausführt, eine sekundäre Speichereinrichtung vom entfernbaren Typ und eine Empfangseinrichtung umfasst, die gleichzeitig eine Vielzahl von Rundfunk-Videosignalen empfängt, wobei das Verfahren umfasst:
einen Präferenzinformations-Erfassungsprozess zum Erfassen von Nutzer-Präferenzinformationen;
einen Rundfunkprogramm-Erfassungsprozess zum Erfassen von Rundfunkprogrammen bei gleichzeitigem Zuweisen von Prioritäten zu den Rundfunkprogrammen entsprechend den Präferenzinformationen;
einen Sekundär-Speicher-Steuerprozess, mit dem Rundfunkprogramm mit höheren Prioritäten unter den durch die Rundfunkprogramm-Erfassungseinrichtung zugewiesenen Prioritäten als archivierte Aufzeichnungsprogramme erfasst werden Rundfunk-Videosignale der archivierten Aufzeichnungsprogramme von der Empfangseinrichtung bezogen werden, und veranlasst wird, dass die Rundfunk-Videosignale in der sekundären Speichereinrichtung aufgezeichnet werden; **gekennzeichnet durch**
einen Prozess zum Steuern des primären Speichers mit dem mehrere Rundfunkprogramme die **durch** die Empfangseinrichtung als Rundfunk-Videosignale empfangen werden können, unter den Rundfunkprogrammen entsprechend den **durch** die Rundfunkprogramm-Erfassungseinrichtung zugewiesenen Prioritäten als reguläre Aufzeichnungsprogramme erfasst werden, Rundfunk-Videosignale der regulären Aufzeichnungsprogramme von der Empfangseinrichtung bezogen werden und veranlasst wird, dass die Rundfunk-Videosignale in der primären Speichereinrichtung aufgezeichnet werden.

## Revendications

1. Appareil d'enregistrement vidéo, comprenant :
un dispositif de stockage primaire (5) qui effectue un enregistrement du type à tampon en anneau ;
un dispositif de stockage secondaire (9) qui est du type amovible ;
un dispositif de réception (1₁-1ₙ) qui reçoit une pluralité de signaux vidéo de diffusion simultanément ;
un dispositif de détection d'informations de préférence (14) qui détecte des informations de préférence d'utilisateur ;
un dispositif de détection de programme de diffusion (13) qui détecte des programmes de diffusion tout en attribuant des priorités aux programmes de diffusion selon les informations de préférence ;
un dispositif de contrôle de stockage secondaire (13) qui détecte, en tant que programmes d'enregistrement archivés, des programmes de diffusion ayant des priorités supérieures parmi les priorités attribuées par le dispositif de détection de programme de diffusion, et obtient des signaux vidéo de diffusion des programmes d'enregistrement archivés provenant du dispositif de réception et entraîne que les signaux vidéo de diffusion sont enregistrés dans le dispositif de stockage secondaire ; **caractérisé par**
un dispositif de contrôle de stockage primaire (13) qui détecte, en tant que programmes d'enregistrement réguliers, plusieurs programmes de diffusion qui peuvent être reçus en tant que signaux vidéo de diffusion par le dispositif de réception parmi les programmes de diffusion selon les priorités attribuées par le dispositif de détection de programme de diffusion et obtient des signaux vidéo de diffusion des programmes d'enregistrement réguliers provenant du dispositif de réception et entraîne que les signaux vidéo de diffusion sont enregistrés dans le dispositif de stockage primaire.

2. Appareil d'enregistrement vidéo selon la revendication 1, dans lequel le dispositif de détection de programme de diffusion (13) comprend un dispositif d'entrée qui accepte le programme de diffusion qui est désigné par l'utilisateur comme un programme d'enregistrement désigné, et
lorsque le programme d'enregistrement désigné a été accepté, le dispositif de contrôle de stockage secondaire détecte le programme d'enregistrement désigné comme le programme d'enregistrement archivé au moment de la diffusion du programme d'enregistrement désigné.

3. Appareil d'enregistrement vidéo selon la revendication 1, dans lequel le dispositif de contrôle de stockage primaire (13) détecte le programme d'enregistrement régulier pour plusieurs quantités des signaux vidéo de diffusion qui peuvent être reçus par le dispositif de réception au moment où l'un, quelconque, du programme d'enregistrement régulier se termine.

4. Appareil d'enregistrement vidéo selon la revendication 1, dans lequel le dispositif de contrôle de stockage secondaire (13) comprend un dispositif de création de programmation de stockage secondaire qui crée des données de programmation de stockage secondaire de réservations d'enregistrement par rapport à tous les programmes d'enregistrement archivés sur une période prédéterminée à un moment prédéterminé et un dispositif d'acquisition qui obtient les signaux vidéo de diffusion des programmes d'enregistrement archivés provenant du dispositif de réception selon les données de programmation de stockage secondaire et les amène à être enregistrés dans le dispositif de stockage secondaire ; et
dans lequel le dispositif de contrôle de stockage primaire (13) comprend un dispositif de création de programmation de stockage primaire qui crée des données de programmation de stockage primaire de réservations d'enregistrement par rapport à tous les programmes d'enregistrement réguliers sur la période prédéterminée au moment prédéterminé et un dispositif d'acquisition qui obtient les signaux vidéo de diffusion des programmes d'enregistrement réguliers provenant du dispositif de réception selon les données de programmation de stockage primaire et les amène à être enregistrés dans le dispositif de stockage primaire.

5. Appareil d'enregistrement vidéo selon la revendication 4, dans lequel les données de programmation de stockage primaire et secondaire sont stockées comme une base de données de programmation.

6. Appareil d'enregistrement vidéo selon la revendication 2 ou 4, dans lequel le programme d'enregistrement désigné est nouvellement accepté par le dispositif d'entrée, le dispositif de création de programmation de stockage primaire et secondaire met à jour les données de programmation primaire et secondaire.

7. Appareil d'enregistrement vidéo selon la revendication 1, dans lequel le dispositif de contrôle de stockage secondaire (13) comprend un dispositif de détermination qui détermine si une capacité d'enregistrement restante du support d'enregistrement dans le dispositif de stockage secondaire est égale ou inférieure à une valeur spécifiée et un dispositif de notification qui notifie un échange du support d'enregistrement lorsqu'il est déterminé que la capacité d'enregistrement restante est égale ou inférieure à la valeur spécifiée par le dispositif de détermination.

8. Appareil d'enregistrement vidéo selon la revendication 1, dans lequel le dispositif de contrôle de stockage secondaire (13) stocke les informations de programme par rapport au programme d'enregistrement archivé dont les signaux vidéo de diffusion sont enregistrés par le dispositif de stockage secondaire comme une base de données de stockage secondaire ; et
dans lequel le dispositif de contrôle de stockage primaire (13) stocke les informations de programme par rapport au programme d'enregistrement régulier dont les signaux vidéo de diffusion sont enregistrés par le dispositif de stockage primaire comme une base de données de stockage primaire.

9. Appareil d'enregistrement vidéo selon la revendication 8, dans lequel les informations de programme stockées dans la base de données de stockage secondaire contiennent un code d'identification du support d'enregistrement qui a été utilisé pour l'enregistrement dans le dispositif de stockage secondaire.

10. Appareil d'enregistrement vidéo selon la revendication 1, dans lequel le dispositif de stockage primaire (13) enregistre le signal vidéo de diffusion du programme d'enregistrement régulier en le multiplexant.

11. Appareil d'enregistrement vidéo selon la revendication 1, comprenant en outre :
un dispositif d'instruction qui donne comme instruction au dispositif de stockage primaire de lire les signaux vidéo de diffusion d'un quelconque du programme d'enregistrement des programmes d'enregistrement réguliers qui ont été enregistrés dans le dispositif de stockage primaire comme les signaux vidéo de diffusion ; et
un dispositif de production qui produit les signaux vidéo de diffusion du programme d'enregistrement, qui ont été lus à partir du dispositif d'enregistrement primaire, vers un moniteur pour reproduction pour affichage ;
dans lequel le dispositif de contrôle de stockage secondaire entraîne que les signaux vidéo de diffusion du programme d'enregistrement, qui ont été lus depuis le dispositif de stockage primaire, sont enregistrés dans le dispositif de stockage secondaire.

12. Appareil d'enregistrement vidéo selon la revendication 1, dans lequel le dispositif de détection de programme de diffusion (13) comprend un dispositif d'acquisition qui obtient les informations de programme de chacun des programmes de diffusion ; et un dispositif d'évaluation qui calcule les valeurs d'évaluation pour chacun des programmes de diffusion selon les informations de programme et les informations de préférence de chaque programme de diffusion et attribue les priorités selon l'ordre dans lequel les valeurs d'évaluation sont élevées pour chaque programme de diffusion.

13. Appareil d'enregistrement vidéo selon la revendication 1, dans lequel le dispositif de contrôle de stockage primaire exclue les programmes d'enregistrement archivés des programmes d'enregistrement réguliers.

14. Procédé pour contrôler un appareil d'enregistrement vidéo comprenant un dispositif de stockage primaire qui effectue un enregistrement du type à tampon en anneau, un dispositif de stockage secondaire du type amovible et un dispositif de réception qui reçoit une pluralité de signaux vidéo de diffusion simultanément, le procédé comprenant :
un processus de détection d'informations de préférence pour détecter des informations de préférence d'utilisateur ;
un processus de détection de programme de diffusion pour détecter des programmes de diffusion tout en attribuant des priorités aux programmes de diffusion selon les informations de préférence ;
un processus de contrôle de stockage secondaire pour détecter, en tant que programmes d'enregistrement archivés, des programmes de diffusion ayant des priorités supérieures parmi les priorités attribuées au dispositif de détection de programme de diffusion, obtenant des signaux vidéo de diffusion des programmes d'enregistrement archivés provenant du dispositif de réception et entraînant que les signaux vidéo de diffusion sont enregistrés dans le dispositif de stockage secondaire ; **caractérisé par**
un processus de contrôle de stockage primaire pour détecter, comme programmes d'enregistrement réguliers, plusieurs programmes de diffusion qui peuvent être reçus comme signaux vidéo de diffusion par le dispositif de réception parmi les programmes de diffusion selon les priorités attribuées par le dispositif de détection de programme de diffusion, obtenant des signaux vidéo de diffusion des programmes d'enregistrement réguliers provenant du dispositif de réception, et amenant les signaux vidéo de diffusion à être enregistrés dans le dispositif de stockage primaire.
